# EUROPEAN PATENT APPLICATION

(11) **EP 4 749 125 A1**
(43) Date of publication of application: **27.05.2026**
(21) Application number: 25215203.8
(22) Date of filing: 12.11.2025
(51) Int. Cl.: F04B 27/04, F04B 39/00, F04B 39/04, F16J 15/34

(54) **WIPER RING FOR RECIPROCATING COMPRESSOR ROD PACKING**

(30) Priority: 25.11.2024 US 202418958005
(71) Applicant: Compressor Products International LLC (CPI), Stafford, TX 77477 (US)
(72) Inventor: MAHIEUX, Pascal, Colleret (FR)
(74) Representative: Murgitroyd & Company

(57) **Abstract**

A rod packing assembly that includes a wiper ring is disclosed. In one embodiment, a rod packing assembly comprises a first ring, a second ring, a third ring, a first biasing member, a second biasing member, and a third biasing member. The third ring has at least one port, and is positioned between the first ring and the second ring. The first ring, the second ring, and the third ring surround a rod and to scrape a surface of the rod. The first biasing member applies a first force to urge the first ring against the rod, and the second biasing member applies a second force to urge the second ring against the rod. The third biasing member applies at least a third force to urge the third ring against the rod. The first and second rings are arranged to apply forces to urge the third ring against the rod.

## Description

### FIELD OF INVENTION

The present invention relates to the field of reciprocating compressors and, in particular, to techniques for performing oil scraping to prevent crankcase oil from contaminating gas and other components of reciprocating compressors.

### BACKGROUND

Reciprocating compressors are positive displacement compressors. A reciprocating compressor generally includes a piston assembly that transfers energy from a crankshaft in a crankcase to gas in a cylinder. A reciprocating shaft, such as a piston rod, that is part of the piston assembly transmits reciprocating motion from the crankshaft to the piston. In order to prevent crankcase oil from contaminating the gas in the cylinder, rod or shaft packing is used along the reciprocating shaft. Rod packing often includes wiper rings disposed around the reciprocating shaft to remove oil from the surface of the reciprocating shaft.

### SUMMARY

Techniques for reducing the amount of contamination in a reciprocating compressor are disclosed. These techniques may be embodied as one or more methods, one or more apparatuses, e.g., wiper rings used for piston rod packing, and/or one or more systems, e.g., reciprocating compressors.

In accordance with at least one embodiment, the disclosure is directed to a rod packing assembly that comprises a first ring, a second ring, a third ring, and a plurality of biasing members including a first biasing member, a second biasing member, and at least a third biasing member. The third ring includes at least one port defined therein, wherein the third ring is coupled to the first ring and to the second ring, and is positioned between the first ring and the second ring. The first ring, the second ring, and the third ring are configured to surround a rod and to collectively scrape a surface of the rod. The first biasing member is arranged around the first ring and applies a first force to the first ring to urge the first ring against the rod and against the third ring, thereby urging the third ring against the rod. The second biasing member is arranged around the second ring and applies a second force to the second ring to urge the second ring against the rod and against the third ring, thereby urging the third ring against the rod. The at least one third biasing member is arranged around the third ring, and applies at least a third force to the third ring to urge the third ring against the rod.

According to at least another embodiment, a reciprocating compressor comprises a piston assembly including a piston and a piston rod, a crankcase containing a crankshaft and oil, and a wiper ring positioned around the piston rod such that the piston rod moves along a first axis through the wiper ring. The piston rod is coupled to the piston and to the crankshaft, and the oil from the crankcase coats the piston rod. The wiper ring is arranged to scrape the surface of the piston rod to remove the oil from the piston rod as the piston rod moves along the first axis. The wiper ring includes a first outer ring, a second outer ring, an inner ring sandwiched between the first outer ring and the second outer ring, and a plurality of biasing elements. The inner ring has a plurality of ports defined therein. The plurality of biasing elements includes a first biasing member arranged to apply a first inward force to urge the first outer ring against the piston rod, a second biasing member arranged to apply a second inward force to urge the second outer ring against the piston rod, and at least one third biasing member arranged to apply a third inward force to urge the inner ring against the piston rod. The first inward force and the second inward force also urge the inner ring against the piston rod, and wherein the oil removed from the piston rod is provided to the inner ring and directed through the plurality of ports.

Among other advantages, using biasing members on the first and second rings to urge the third ring against the rod may ensure that the three rings maintain contact with one another to prevent leakage between the rings. The combination of three rings utilized for the wiper ring/rod packing assembly enables this enhanced biasing force while still allowing the plurality of ports to be provided unobstructed to allow suitable drainage/oil collection via the ports.

In accordance with still another embodiment, a reciprocating compressor includes a piston assembly, a crankcase, and a packing ring assembly. The piston assembly includes a piston and a piston rod. The crankcase contains a crankshaft and oil, wherein the piston rod is coupled to the piston and to the crankshaft, and wherein the oil coats the piston rod. The packing ring assembly is positioned around the piston rod such that the piston rod moves along a first axis through the packing ring assembly. The packing ring assembly includes a first assembly having a plurality of scraping surfaces arranged to be forced against a surface of the piston rod to scrape the surface of the piston rod to remove the oil from the piston rod as the piston rod moves along the first axis. The packing ring assembly is further arranged to capture the oil removed from the piston rod and to direct the oil removed from the piston rod through the packing ring assembly to return the oil removed from the piston rod to the crankcase. Among other advantages, multiple scraping surfaces in a ring assembly that can also capture and redirect removed oil may provide efficient scraping and efficient operation.

The aforementioned advantages and other advantages and features will become evident in view of the drawings and detailed description.

### BRIEF DESCRIPTION OF THE DRAWINGS

To complete the description and in order to provide for a better understanding of the present invention, a set of drawings is provided. The drawings form an integral part of the description and illustrate an embodiment of the present invention, which should not be interpreted as restricting the scope of the invention, but just as an example of how the invention may be carried out. The drawings comprise the following figures:
FIG. 1 is a diagrammatic representation of a reciprocating compressor.
FIG. 2 is a diagrammatic cross-sectional representation of a reciprocating compressor.
FIG. 3 is a diagrammatic representation of a disassembled wiper ring assembly in accordance with an embodiment.
FIG. 4 is a diagrammatic representation of components of a wiper ring assembled together in accordance with an embodiment.
FIG. 5 is a diagrammatic exploded view representation of a wiper ring, *e.g.,* wiper ring 404 of FIG. 4, in accordance with an embodiment.
FIG. 6 is a cross-sectional representation of a wiper ring in accordance with an embodiment.
FIG. 7A is a cross-sectional representation of a portion of a wiper ring, *e.g.,* a bottom portion of wiper ring 604 of FIG. 6, in accordance with an embodiment.
FIG. 7B is a cross-sectional representation of a portion of a wiper ring in a packing case, *e.g.,* the portion 704 of FIG. 7A, shown with an enclosure in accordance with an embodiment.
FIG. 8 is a process flow diagram which illustrates a method of utilizing a wiper ring to scrape oil from the surface of a piston rod of a reciprocating compressor in accordance with an embodiment.
FIG. 9 is a block diagram representation of a process of a scraping oil from a piston rod and returning the oil to a crankcase in accordance with an embodiment.
FIG. 10 is a diagrammatic cross-sectional block diagram representation of a wiper ring with components which apply forces on a piston rod in accordance with an embodiment.

Like reference numerals have been used to identify like elements throughout this disclosure.

### DETAILED DESCRIPTION

The following description is not to be taken in a limiting sense but is given solely for the purpose of describing the broad principles of the invention. Embodiments of the invention will be described by way of example, with reference to the above-mentioned drawings showing elements and results according to the present invention.

Generally, the present application is drawn to techniques for preventing a substance such as oil contained in a crankcase of a reciprocating compressor from migrating throughout the reciprocating compressor. These techniques may be embodied as a reciprocating compressor with a wiper ring assembly that includes a plurality of outer rings, an inner ring sandwiched between the outer rings, and a plurality biasing elements that force the outer rings and the inner ring against a piston rod using such that multiple scraping surfaces may scrape oil from the surface of the piston rod while substantially preventing the oil from effectively moving along the piston rod away from a crankcase that contains a crankshaft and oil. The inner ring may be coupled to the outer rings, in part, using features defined in the outer rings which apply an inward force to the inner ring to further force the inner ring against the piston rod. The inner ring may include one or more ports which allow scraped oil captured within the inner ring to be directed through the inner ring towards a conduit that may return the oil to the crankcase.

A reciprocating piston compressor typically utilizes a crankshaft and crosshead that drive a piston rod and piston in different directions along an axis to compress a gas. Within the reciprocating piston compressor, oil is used to lubricate components including the crankshaft and crosshead, which are contained within a crankcase. The use of oil to lubricate the crankshaft and the crosshead enables the crankshaft to move efficiently, and serves to cool the crankshaft and crosshead. As a result, the operation and performance of the reciprocating piston compressor may be improved. However, other, non-piston compressors may also utilize a crankshaft and oil configuration to drive a reciprocating shaft and a piston compressor is merely discussed an example. To be clear, the present application may be implemented in and/or utilized with piston compressors and other compressors of other types.

That said, when a reciprocating compressor operates, oil used to lubricate a crankshaft may effectively move throughout the reciprocating compressor. By way of example, a piston rod of a piston assembly may carry oil downstream of the crosshead assembly within the reciprocating compressor toward the cylinder end of the assembly. When oil is carried throughout the reciprocating compressor, the operation and performance of the reciprocating compressor may be compromised, e.g., pressurization provided by a piston of a piston assembly may be reduced and/or fluid compressed by the piston may become contaminated, as could other sealing components which may come into contact with crankcase oil.

In general, to reduce the amount of oil that may be carried throughout a reciprocating compressor by a piston rod assembly, the oil may be scraped or wiped off of the surfaces of a piston rod of the piston rod assembly. A wiper ring may surround the piston rod, and may be configured to scrape the oil off of the piston rod as the piston rod moves linearly along an axis.

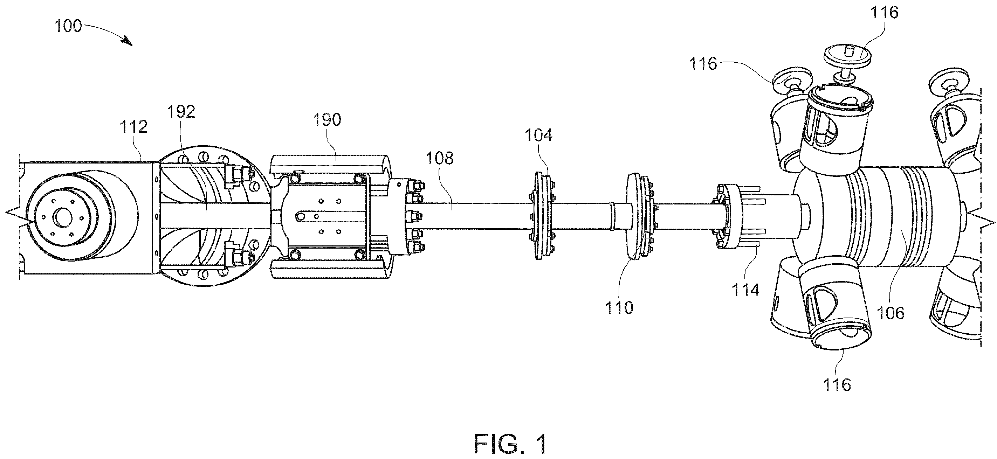

FIG. 1 is a diagrammatic representation of a reciprocating compressor. A reciprocating compressor 100 includes components such as a crankshaft 112, a piston assembly 106 that contains a piston and rider/guide rings, a piston rod 108, and one or more valves 116. Piston rod 108 is coupled to a piston contained within a cylinder (not shown) and to a crosshead 190. One end of piston rod 108 is coupled to crosshead 190 via a connecting rod 192 which is connected at its other end to crankshaft 112. Reciprocating compressor 100 also includes any number or rod packing cases which include packing rings, as for example wiper rod packing case assembly104, intermediate rod packing case assembly 110, and rod packing case assembly 114. Rod packing case assembly 104 may be a wiper packing case assembly which holds rings configured to scrape or to wipe oil from the surface of piston rod 108. Rod packing case assembly 110 and rod packing case assembly 114 may be configured to generally reduce gas leakage along piston rod 108.

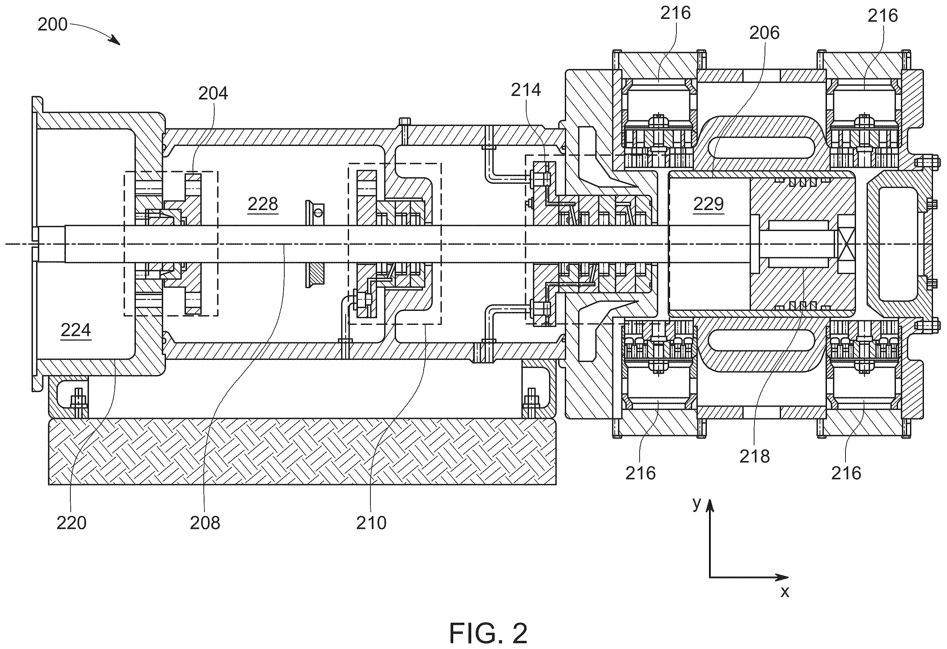

FIG. 2 is a diagrammatic cross-sectional representation of a reciprocating compressor. A reciprocating compressor 200 includes a piston assembly that has a piston 218 and a piston rod 208. Piston 218 is generally arranged within a cylinder liner 206. Reciprocating compressor 200 also includes valves 216 (e.g., one-way valves) and a crankcase 220 that contains an oil 224. It should be appreciated that crankcase 220 generally surrounds a crankshaft (not shown) that is coupled to piston rod 208, *e.g.,* through a connecting rod and/or a crosshead (not shown).

Multiple packing rings such as a wiper ring assembly 204, an intermediate packing ring assembly 210, and a main packing assembly 214 may each substantially surround, or be formed around, piston rod 208. Wiper ring assembly 204, in one embodiment, may include an enclosure such as a packing case, a plurality of outer rings, an inner ring with ports or openings defined therein, and a plurality of springs, as will be discussed below. As piston rod 208 moves along an x-axis, or otherwise moves linearly, wiper ring assembly 204 scrapes or wipes oil 224 that is coated onto piston rod 208, *e.g.,* as a film, off the outer surface of piston rod 208 as portions of piston rod 208 move through crankcase 220. When oil 224 that is carried on an outer surface of piston rod 208 is scraped off by wiper ring assembly 204, oil 224 may be prevented from contaminating a gas 229 that is present in cylinder 206 and/or purge gas 228. Purge gas 228 may be, but is not limited to being, a nitrogen purge gas.

In one embodiment, wiper ring assembly 204 may be substantially attached to main packing assembly 214. That is, a case of wiper ring assembly 204 may be substantially attached to a packing case of main packing assembly 214.

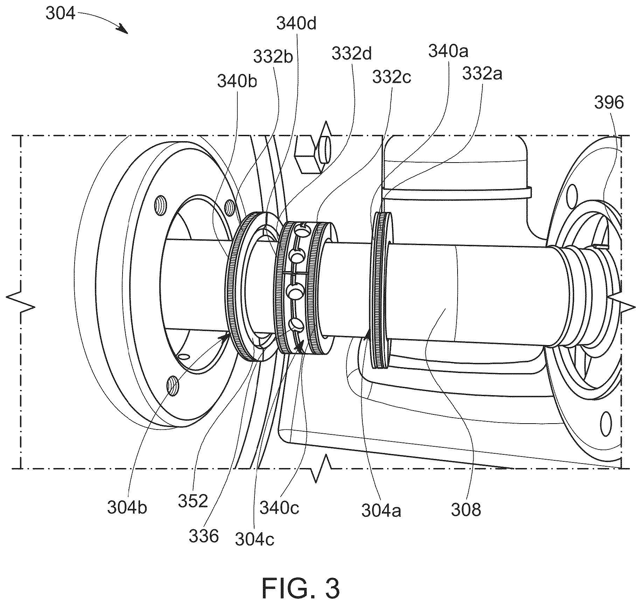

With reference to FIG. 3, components or a wiper ring assembly will be described in accordance with an embodiment. A wiper ring assembly 304 configured to scrape or to wipe an oil film from a surface of a piston rod 308 is shown in FIG. 3 in a disassembled, or exploded, configuration. It should be appreciated that wiper ring assembly 304 may be contained in an enclosure or a cup 396. Wiper ring assembly 304 surrounds piston rod 308, and includes a first outer ring 304a, a second outer ring 304b, and an inner ring 304c. Inner ring 304c is positioned between first outer ring 304a and second outer ring 304b, and includes a plurality of ports 336 or openings defined therein. The plurality of ports 336 are arranged to direct oil that is scraped by wiper ring assembly 304 substantially through inner ring 304c, *e.g.,* and to a crankcase via drain passages in wiper assembly housings and/or cups, etc.

In general, first outer ring 304a and second outer ring 304b are each arranged to be coupled to inner ring 304c, *i.e.,* to substantially opposite sides of inner ring 304c, insofar as the term "coupled" and variations thereof are used herein to describe two connected components, *e.g*., components that are abutting, friction fit together, and/or connected via compression, but do not necessarily require a fastening or secured connection between two parts. First outer ring 304a and second outer ring 304b each include a feature 352, as shown in second outer ring 304b, that is arranged to enable outer rings 304a, 304b to be coupled to inner ring 304c.

First outer ring 304a is shaped to enable a first biasing member 332a to be supported around an outer surface of first outer ring 304a. In one embodiment, first outer ring 304a includes an open channel 340a or a recess in which first biasing member 332a may be substantially disposed or seated. Similarly, second outer ring 304b is shaped to enable a second biasing member 332b to be supported around an outer surface of second outer ring 304b. Like first outer ring 304a, second outer ring 304b may include an open channel 340b or a recess in which second biasing member 332b may be disposed.

Inner ring 304c is shaped to enable a third biasing member 332c and a fourth biasing member 332d to be supported around an outer surface of inner ring 304c. In one embodiment, inner ring 304c may include an open channel 340c or recess in which third biasing member 332c may be supported and an open channel 340d or recess in which fourth biasing member 332d may be supported. Each of the aforementioned open channels - *e.g.,* open channels 340a-d - may be annular channels that extend entirely around their respective ring.

Biasing members 332a-d are generally arranged to apply force on rings 304a-c to effectively force or otherwise urge rings 304a-c against piston rod 308. Biasing members 332a-d may be springs such as garter springs or annular springs, although it should be appreciated that biasing members 332a-d are not limited to being springs. Also, springs 322a-d may be annular springs that extend entirely around their respective ring, e.g., within their respective open channel 340a-d.

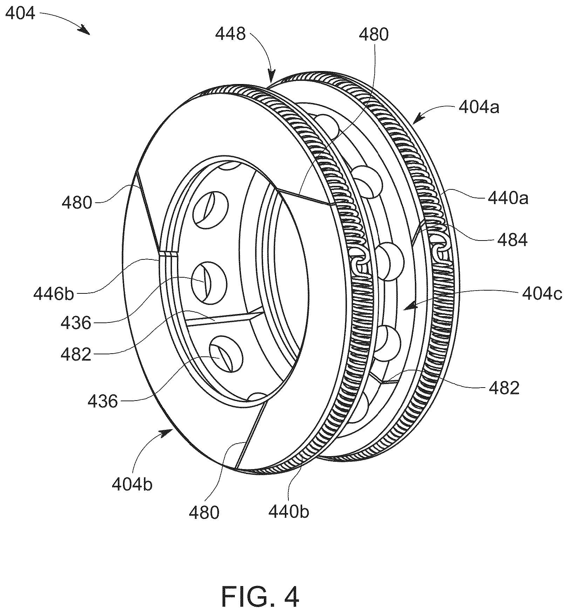

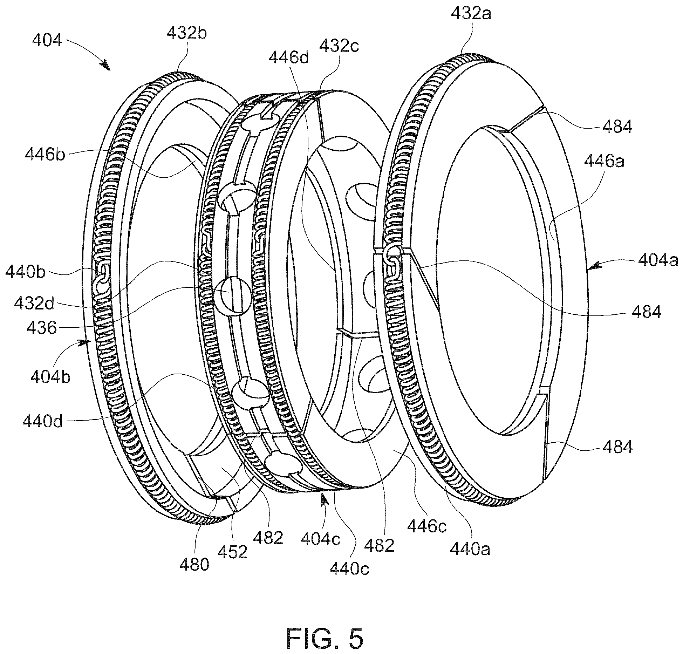

Referring next to FIG. 4 and FIG. 5, components of a wiper ring assembly will be described in accordance with an embodiment. FIG. 4 is an overall assembled representation of a wiper ring 404, and FIG. 5 is a diagrammatic exploded view representation of wiper ring 404 in accordance with an embodiment. Wiper ring 404 includes a first outer ring 404a, a second outer ring 404b, and an inner ring 404c. When incorporated in a reciprocating compressor, wiper ring 404 may be oriented such that first outer ring 404a is on a piston-facing side of wiper ring 404, and second outer ring 404b is on a crankcase-facing side of wiper ring 404.

First outer ring 404a and second outer ring 404b may substantially prevent oil coated on a piston rod (not shown) from passing through wiper ring 404 and/or bypassing wiper ring 404. In other words, first outer ring 404a and second outer ring 404b, in cooperation with inner ring 404c, may facilitate oil drainage and may substantially prevent oil contained in a crankcase of a reciprocating compressor from passing throughout the reciprocating compressor.

First outer ring 404a and second outer ring 404b each have a feature 452 defined therein which is configured to accommodate inner ring 404c to be seated against first outer ring 404a and second outer ring 404b when first outer ring 404a and second outer ring 404b are coupled to inner ring 404c. Feature 452 may be a recess, groove, indentation, shelf, and/or substantially any structure which may enable portions of inner ring 404c to be readily received by first outer ring 404a and second outer ring 404b when wiper ring 404 is assembled. In at least some instances, feature 452 and/or a portion of inner ring 404c configured to engage feature 452 may be tapered to encourage outer rings 404a and 404b outwards, away from ports included on the inner ring 404c to ensure these ports remain unblocked and unobstructed.

First outer ring 404a includes a first scraping surface 446a that is configured to scrape or to wipe oil from a surface of a piston rod (not shown) around which wiper ring 404 is disposed or otherwise positioned. Second outer ring 404b includes a second scraping surface 446b that is configured to scrape or to wipe oil from a surface of a piston rod (not shown). Inner ring 404c includes a third scraping surface 446c and a fourth scraping surface 446d. In one embodiment, first scraping surface 446a and third scraping surface 446c may be arranged to scrape oil from a surface of a piston rod (not shown) when the piston rod moves in a first direction, and second scraping surface 446b and fourth scraping surface 446d may be arranged to scrape oil from the surface of the piston rod when the piston rod moves in a second direction that is opposite from the first direction. Or, more generally, rings 404a-404c may collectively scrape a surface of a reciprocating shaft, such as a piston rod, around which the rings 404a-404c are disposed.

First outer ring 404a has a channel 440a arranged to accommodate a first biasing member 432a such that first biasing member 432a is disposed around first outer ring 404a. Second outer ring 404b has a channel 440b arranged to accommodate a second biasing member 432b. Inner ring 404c has a plurality of ports 436 defined therein, and has a channel 440c arranged to accommodate a third biasing member 432c as well as a channel 440d arranged to accommodate a fourth biasing member 432d. Ports 436 are defined along a circumference of inner ring 404c. It should be appreciated that the number, size, and shape of ports 436 may vary widely depending upon, for example, the requirements of a particular reciprocating compressor of which wiper ring 404 is a part.

Biasing members 432a-d may be springs such as garter springs, *e.g.*, extension garter springs that are configured to apply inward radial forces with respect to wiper ring 404. As a result, the oil scraping or wiping capabilities of wiper ring 404 may be enhanced. That is, the ability of first scraping surface 646a, second scraping surface 646b, third scraping surface 646c, and a fourth scraping surface 646d to cause oil to be removed from the surface of a piston rod (not shown) is improved by the inclusion of biasing members 432a-d in wiper ring 404. For example, biasing members 432a-d may compress the wiper ring 404 against a piston rod (not shown) so that oil is less likely to migrate along a piston rod (not shown) past wiper ring 404 when scraping surfaces 646a-d are effectively forced against the piston rod.

Biasing member 432a, when positioned in channel 440a, is arranged to force, to bias, or to otherwise urge first outer ring 404a against a piston rod (not shown). Similarly, when biasing member 432b is positioned in channel 440b, biasing member 432b effectively forces, biases, or urges second outer ring 404b against a piston rod (not shown). Biasing member 432c and biasing member 432d are positioned in channel 440c and channel 440d, respectively, to effectively force, bias, or urge inner ring 404c against a piston rod (not shown). When inner ring 404c is coupled to first outer ring 404a and second outer ring 404b, first outer ring 404a and second outer ring 404b also apply an inward force on inner ring 404c, thereby forcing or urging inner ring 404c against a piston rod (not shown). The inward forces applied by biasing members 432a-d, and the inward force applied to inner ring 404c by first outer ring 404a and second outer ring 404b enhance the ability of wiper ring 404 to scrape or wipe oil off of a piston rod (not shown). That is, additional inward forces facilitate the ability of scraping surfaces 464a-d to maintain contact with a piston rod (not shown) to scrape or wipe oil off of the piston rod.

Inner ring 404c may substantially function as a reservoir when coupled to, or sandwiched between, first outer ring 404a and second outer ring 404b. For example, inner ring 404c may cooperate with first outer ring 404a, second outer ring 404b, and an enclosure (not shown) to form a reservoir. Such a reservoir may be coupled to a conduit which may provide oil from the reservoir to a crankcase, or otherwise facilitate the drainage of oil through the conduit to the crankcase.

When wiper ring 404 is assembled, first outer ring 404a and second outer ring 404b are offset from each other such that a gap 448 is substantially defined along a portion of inner ring 404c. Gap 448 is configured to expose ports 436 to facilitate sufficient oil flow through inner ring 404c, and to reduce overflow or blockage of oil within inner ring 404c. That is, gap 448 is carefully sized to encourage efficient flow through ports 436.

First outer ring 404a, second outer ring 404b, and inner ring 404c may be formed from any suitable material including, but not limited to including, polymers. For example, in one embodiment, first outer ring 404a and second outer ring 404b may be formed from polytetrafluoroethylene (PFTE) or polyetheretherketone (PEEK), while inner ring 404c may also be formed from PEEK or PTFE. PEEK may be harder than PFTE and, thus, may be relatively stronger while the PTFE is relatively more deformable. However, other materials that create similar relative characteristics may also be utilized. Biasing members 432a-d may be formed from materials including, but not limited to including, steel alloys such as stainless steel and carbon steel, as well as bronze alloys.

As shown in FIGs. 4 and 5, first outer ring 404a may include one or more tangential cuts 480, second outer ring 404b may include one or more tangential cuts 484, and inner ring 404c may include one or more radial cuts 482. That is, first outer ring 404a, second outer ring 404b, and inner ring 404c may be segmental. Tangential cuts 480, 482 may be optional, and may have no significant gaps. Radial cuts 482 may be optional, and may have an associated gap.

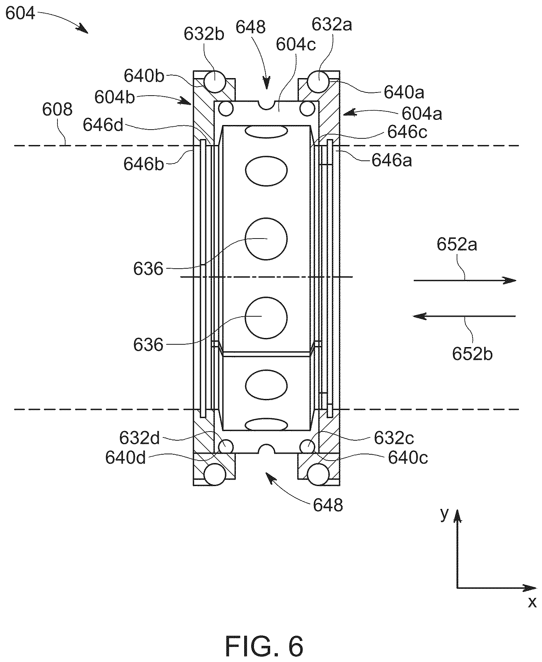

FIG. 6 is a cross-sectional representation of a wiper ring in accordance with an embodiment. A wiper ring 604 substantially surrounds a piston rod 608, *i.e.,* piston rod 608 is arranged to travel through wiper ring 604 along an x-axis. Piston rod 608 may travel in a first direction 652a along the x-axis, *e.g*., away from a crankcase, and/or in a second direction along the x-axis 652b, *e.g*., towards the crankcase.

Wiper ring 604 includes a first outer ring 604a that has a first scraping surface 646a, a second outer ring 604b that has a second scraping surface 646b, and an inner ring 604c that has a plurality of ports 636 defined therein, as well as a third scraping surface 646c and a fourth scraping surface 646d. A first biasing element 632a is disposed in a first channel 640a around first outer ring 604a, and a second biasing element 632b is disposed in a second channel 640b around second outer ring 604b. Inner ring 604c includes a third channel 640c in which a third biasing element 632c is disposed, and a fourth channel 640d in which a fourth biasing element 632d is disposed.

As piston rod 608 moves in a first direction with respect to the x-axis, first scraping surface 646a and third scraping surface 646c may scrape or wipe oil from piston rod 608. As piston rod 608 moves in a second direction with respect to the axis, or in an opposite direction from the first direction, second scraping surface 646b and fourth scraping surface 646d may scrape or wipe oil from piston rod 608. However, in at least some instances, the second scraping surface 646b and the fourth scraping surface 646c may be the primary scraping surfaces because surfaces 646b and 646d may be the scraping surfaces closest to a crankcase from which the oil to be scraped may emanate (ring 604b may be crankcase-facing). In fact, in some instances, the second scraping surface 646b may be the primary scraping surface since this surface may be the first scraping surface to encounter oil leaking from the crankcase.

A gap 648 is formed between first outer ring 604a and second outer ring 604b. Gap 648 enables ports 636 of inner ring 604c to be substantially exposed within wiper ring 604 such that oil that is scraped or wiped from piston rod 608 may flow through inner ring 604c. Gap 648 may serve as a passage through which oil flow through wiper ring 604 may be facilitated. In at least some instances, outer surfaces of inner ring 604c may be tapered to push outer rings 604a and outer ring 604b outwards and maintain the gap 648 at a distance than spans beyond ports 636.

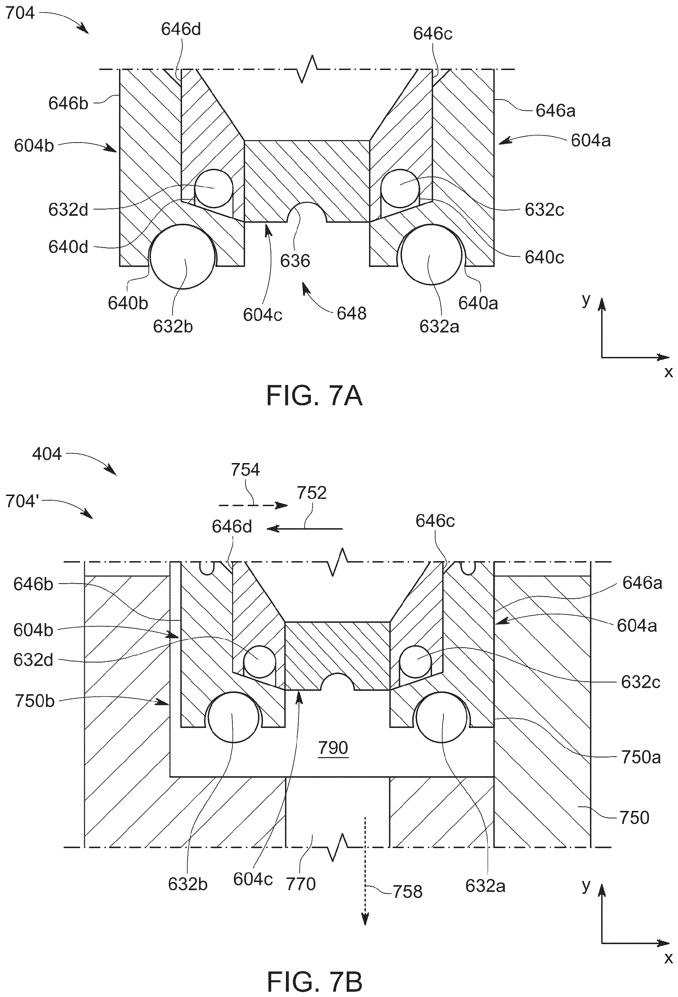

Gap 648 is shown in more detail in FIG. 7A, which is a cross-sectional representation of a portion 704 of wiper ring 604 in accordance with an embodiment. The presence of gap 648 enables oil flow through inner ring 604c without first outer ring 604a and/or second outer ring 604b being configured to accommodate the positioning of one or more ports 636. In other words, first outer ring 604a and/or second outer ring 604b may be configured to address scraping capabilities rather than to address oil flow concerns. As such, the configurations of first outer ring 604a and/or second outer ring 604b may have any suitable profile without hindering oil flow through inner ring 604c.

In one embodiment, the configuration or profile of first outer ring 604a and/or second outer ring 604b may facilitate gas sealing, *e.g*., during an operation in which gas is directed through a reciprocating compressor of which wiper ring 404 is a part. Gas sealing may enable gas compressed by the reciprocating compressor to purge gas.

FIG. 7B is a cross-sectional representation of portion 704 of FIG. 7A as shown with an enclosure or packing case in accordance with an embodiment. Portion 704' includes an enclosure 750 that is arranged to cooperate with first outer ring 604a and second outer ring 604b to provide gas sealing within portion 704'. First outer ring 604a is arranged to substantially abut against an inner surface 750a of enclosure 750, as for example when portion 704' is moving in a direction 754.

More specifically, in some instances, the wiper ring 404 spans a lateral dimension (*e.g*., a dimension spanning the x-axis) that is smaller than a lateral dimension of enclosure 750. Thus, wiper ring 404 can shift laterally within the enclosure 750, at least a small amount, and may move in such a manner in response to movement of a piston rod (*e.g.*, moving with the piston rod). Accordingly, when the piston rod moves the wiper ring 404 towards a piston (not shown) in direction 754, the first outer ring 604a may move into contact with the enclosure 750 (as shown) and oil may fill gaps between the wiper ring 404 and the enclosure 750 (*e.g.,* between second outer ring 604b and a proximate inner wall 750b of enclosure 750). The abutment between outer ring 604a and inner surface 750a may prevent oil from leaking towards the piston cylinder, *e.g.,* in direction 754, between outer ring 604a and inner surface 750a while also substantially preventing gas, such as purge gas, from seeping through/between the wiper ring 404 and enclosure 750, *e.g.,* in direction 752.

However, when the piston rod moves towards the crankcase, in direction 752 (opposite direction 754), less oil may be present in the wiper ring 404 (*e.g.,* since oil will be scraped when piston rod moves in direction 754 and reciprocation in direction 752 likely occurs before the piston rod moves back into contact with oil). Thus, when the piston rod moves in direction 752 (*e.g*., towards the crankcase), the second outer ring 604b may move into abutment with the inner surface 750b of enclosure 750, forming a seal therebetween. Then, if gas seeps between the enclosure 750 and the wiper ring 404), the gas will be blocked from traveling upstream of the wiper ring 404, *i.e.,* past the wiper ring 404 towards the crankcase.

In short, in addition to its wiping and oil capture functionality, the wiper ring 404 creates a gas seal that essentially blocks gas flow around wiper ring 404. Hence, an amount of gas flow which flows to another part of a reciprocating compressor may be reduced. In one embodiment, first outer ring 604a may be shaped to accommodate a profile or contour of inner surface 750a in order to enable first outer ring 604a to seal against inner surface 750a to provide a gas seal having desired qualities. Additionally or alternatively, second outer ring 604b may be shaped to accommodate a profile or contour of inner surface 750b in order to enable second outer ring 604b to seal against inner surface 750b to provide a gas seal having desired qualities. It should be appreciated that outer ring 604a and b may also be shaped to accommodate a profile or contour of an inner surface of enclosure 750.

As oil flows into enclosure 750, the oil may flow through inner ring 604c, into a reservoir 790 defined in enclosure 750, and out through an opening 770 in enclosure 750, as indicated by direction 758. Opening 770 may be coupled to at least one oil drainage opening in enclosure 750 and/or conduit (not shown) through which oil may flow to a crankcase.

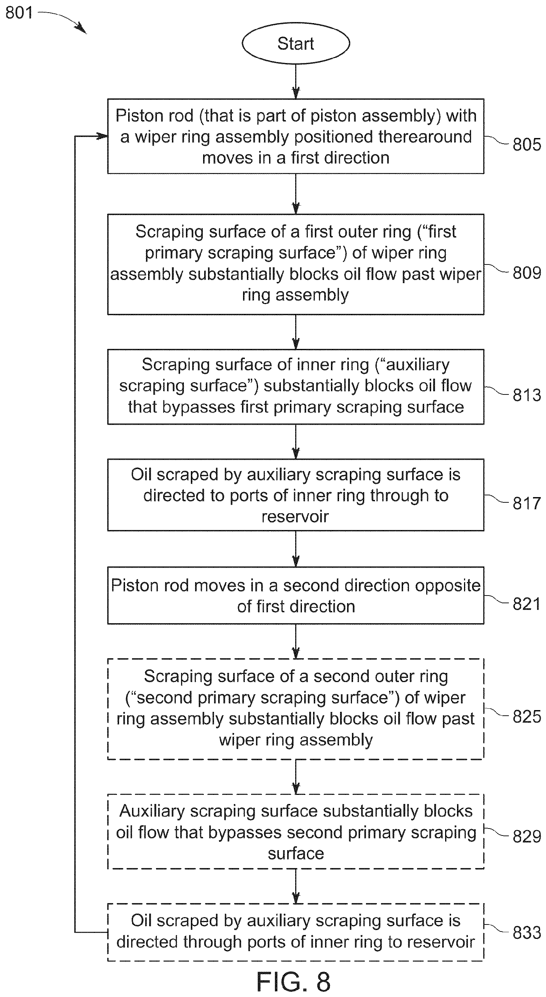

Referring next to FIG. 8, the operation of a wiper ring that includes two outer rings and an inner ring with ports formed therein and is part of a reciprocating compressor will be described in accordance with an embodiment. A method 801 of utilizing a wiper ring that is part of a reciprocating compressor to scrape or to wipe a piston rod begins at a step 805 in which a piston rod of a piston assembly moves in a first direction. A wiper ring assembly is positioned about the piston rod, *e.g.,* a wiper ring assembly substantially surrounds the piston rod, such that the piston rod moves through the wiper ring assembly. In one embodiment, the wiper ring assembly is positioned in an enclosure or a cup, and includes a first outer ring, a second outer ring, and an inner ring in which one or more ports are formed. The first direction may be an outward direction in which the piston rod moves away from a crankcase of the reciprocating compressor.

As the piston rod moves in the first direction, a scraping surface of the first outer ring, or the first primary scraping surface of the wiper ring assembly, substantially blocks oil from flowing past the wiper ring assembly by scraping oil from the surface of the piston rod in a step 809. In generally, a majority of the oil flow past the wiper ring assembly may effectively be blocked or scraped by the first primary scraping surface. The oil that is blocked or scraped by the primary scraping surface may be provided to a reservoir formed in an enclosure, e.g., reservoir 790 as shown in FIG. 7, in which the wiper ring assembly is positioned.

A scraping surface of the inner ring, or an auxiliary scraping surface of the wiper ring assembly, substantially blocks oil flow that bypasses the first primary scraping surface in a step 813. That is, the auxiliary scraping surface scrapes oil off of the surface of the piston rod that has not been blocked or scraped by the first primary scraping surface. It should be appreciated that the inner ring may have two auxiliary scraping surfaces, with one auxiliary scraping surface on each side of the inner ring.

In a step 817, the oil scraped by the auxiliary scraping surface is directed through ports of the inner ring, *e.g.,* to a reservoir formed by an enclosure and/or through a conduit to a crankcase of the reciprocating compressor. In other words, the scraped oil is provided through ports of the inner ring to a crankcase.

Once the oil scraped by the auxiliary scraping surface is directed through ports of the inner ring, the piston rod moves in a second direction that is opposite of the first direction in a step 821. In some instances, the wiper assembly continues to scrape oil from the piston rod as the piston rod moves in the second direction, but in other instances, the piston rod may not be coated in oil to be removed when moving in the second direction. Thus, steps 825, 829, and 833 may be considered optional and are depicted in dashed boxes. That said, as the piston rod moves in the second direction, or an inward direction. the scraping surface of the second outer ring, or the second primary scraping surface, of the wiper ring assembly substantially blocks oil flow around the wiper ring assembly in a step 825.

After the second primary surface substantially blocks oil flow, process flow proceeds to a step 829 in which at least one of the auxiliary scraping surfaces blocks oil flow that bypasses the second primary scraping surface. In other words, at least one of the auxiliary scraping surfaces scrapes oil from the surface of the piston rod. It should be appreciated that when the piston rod moves in the second direction, the amount of oil that may remain on the piston rod to be scraped is generally relatively low.

The oil scraped from the surface of the piston by at least one of the auxiliary scraping surfaces is directed through ports of the inner ring in a step 833 to a reservoir or a crankcase. From step 833, process flow returns to step 805 in which the piston rod moves in the first direction.

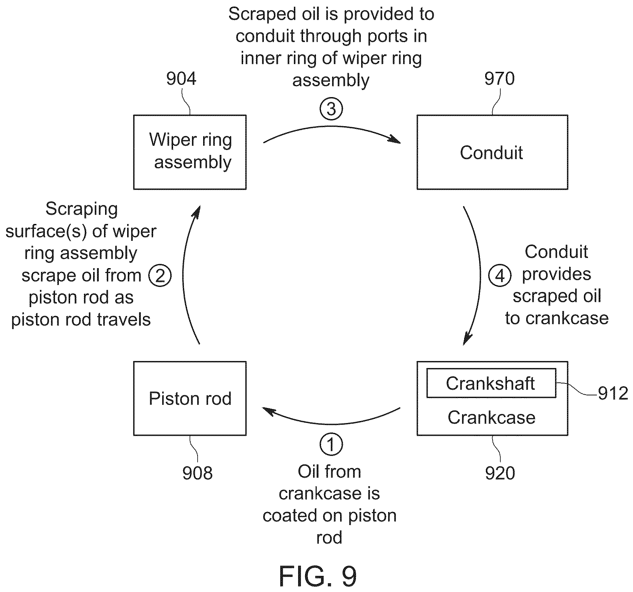

FIG. 9 is a block diagram representation of a process of a scraping or wiping oil from a piston rod and returning the oil to a crankcase in accordance with an embodiment. At a time T1, oil from a crankcase 912 of a reciprocating compressor that contains a crankshaft 920 is coated onto a piston rod 908 of the reciprocating compressor. The oil is coated onto piston rod 908 as piston rod 908 moves within a crankcase of the reciprocating compressor. That is, the oil forms an oil coating on piston rod 908.

At a time T2, one or more scraping surfaces of a wiper ring assembly 904 of the reciprocating compressor scrapes oil from piston rod 908 as piston rod 908 travels. In one embodiment, wiper ring assembly 904 includes, as described above, two outer rings, an inner ring with one or more ports defined therein, and four biasing members such as springs. It should be appreciated that rings and biasing members of wiper ring assembly 904 may generally be contained within an enclosure, *e.g*., a packing case, of wiper ring assembly 904.

The scraped oil, or oil coating scraped from a surface of piston rod 908 by wiper ring assembly 904, may be provided to a conduit 970 at a time T3. The scraped oil may be provided through ports in an inner ring of wiper ring assembly 904 to conduit 970, as for example via a reservoir included in wiper ring assembly 904. Conduit 970 provides the scraped oil to crankcase 920 at a time T4. In one embodiment, conduit 970 may be coupled to one or more oil drainage holes of an enclosure of wiper ring assembly 904.

As previously mentioned, biasing members may apply forces to outer rings and an inner ring of a wiper ring to effectively force scraping surfaces of the outer rings and the inner ring against a piston rod. Further, features of the outer rings, *e.g*., feature 452 of second outer ring 404b as shown in FIG. 4, may further force an inner ring against the piston rod. Substantially forcing outer rings and an inner ring against a piston rod may reduce an amount of oil which may pass between the outer rings and the piston rod, and an amount of oil which may pass between the inner ring and the piston rod.

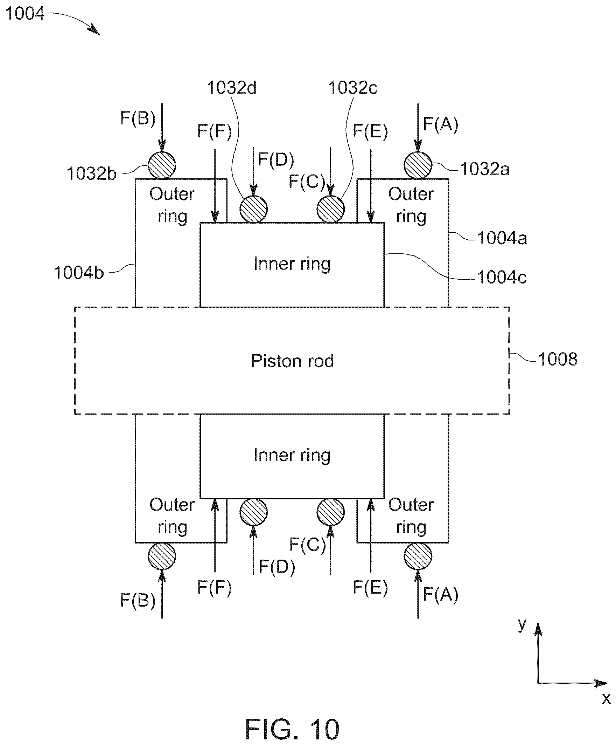

With reference to FIG. 10, forces which urge a wiper ring against a piston rod will be described in accordance with an embodiment. A wiper ring 1004 includes a first outer ring 1004a, a second outer ring 1004b, and an inner ring 1004c which are arranged such that a piston rod 1008 may pass through first outer ring 1004a, second outer ring 1004b, and inner ring 1004c.

First outer ring 1004a, second outer ring 1004b, and inner ring 1004c are configured to be in contact with an outer surface of piston rod 1008 such that, as piston rod 1008 moves along an x-axis, scraping surfaces (not shown) of first outer ring 1004a, second outer ring 1004b, and inner ring 1004c may remove oil from the surface of piston rod 1008, as described above. To effectively force or to otherwise urge first outer ring 1004a, second outer ring 1004b, and inner ring 1004c against piston rod 1008, biasing members 1032a-d are included in wiper ring 1004. As discussed above, for example with respect to FIGs. 4 and 5, biasing members may generally be situated in channels of outer rings and an inner ring. Channels are not shown in with respect to first outer ring 1004a, second outer ring 1004b, and inner ring 1004c for ease of illustration.

A first biasing member 1032a is configured to apply an inward force F(A) along a y-axis that urges first outer ring 1004a against piston rod 1008. A second biasing member 1032b is configured to apply an inward force F(B) along the y-axis that urges second outer ring 1004b against piston rod 1008. Third biasing member 1032c is configured to apply an inward force F(C) along the y-axis and fourth biasing member 1032d is configured to apply an inward force F(D) along the y-axis that urges inner ring 1004c against piston rod 1008.

In one embodiment, the overall configuration or shape of first outer ring 1004a and second outer ring 1004b enables first outer ring 1004a and second outer ring 1004b to apply additional forces to inner ring 1004 to further urge inner ring 1004 against piston rod 1008. As described above with respect to FIGs. 4 and 5, a feature, *e.g.,* feature 452, of second outer ring 1004b enables inner ring 1004c to be seated or otherwise accommodated against second outer ring 1004b such that second outer ring 1004b overlaps the inner ring 1004c and may further force inner ring 1004c against a piston rod. Similarly, a feature, *e.g*., feature 452, of first outer ring 1004a enables inner ring 1004c to be seated or otherwise accommodated against first outer ring 1004a such that first outer ring 1004a overlaps the inner ring 1004c and may further force inner ring 1004c against a piston rod. Put another way, the shapes or contours of first outer ring 1004a and second outer ring 1004b enable an inward force F(E) and an inward force F(F), respectively, to be applied to inner ring 1004c by first outer ring 1004a and second outer ring 1004b to further force inner ring 1004c against piston rod 1008. Among other advantages, overlapping rings may allow for greater spring force against the piston rods while also sealing the separate rings of a wiper ring assembly against each other. This ensure that scraped oil travels through ports of inner ring 1000c, *e.g.,* instead of between rings of the assembly.

Although only a few embodiments have been described in this disclosure, it should be understood that the disclosure may be embodied in many other specific forms without departing from the spirit or the scope of the present disclosure. By way of example, outer rings and an inner ring have been described as including one or more channels or grooves that are arranged to substantially contain biasing members such that the biasing members remain disposed around the rings. In some embodiments, biasing members may be disposed around the outer rings and an inner ring without utilizing one or more channels. That is, channels formed in outer rings and/or an inner ring may be optional.

Forces applied to outer rings and an inner ring of a wiper ring to force the wiper ring against a piston rod have generally been described as being applied in a direction along a y-axis. It should be appreciated that forces applied, as for example by biasing members and/or by features of an outer ring, are not limited to being applied in a direction along a y-axis. Forces may have components along other axes, *e.g.,* an x-axis, in addition to, or in lieu of, a component along a y-axis.

In one embodiment, biasing members such as springs may be provided for "side loading," or applying forces to a wiper ring in a direction along an x-axis or a z-axis. Further, a tapered design may be incorporated with respect to a wiper ring to apply forces in a direction along an x-axis or a z-axis. It should be appreciated that the application of side loading to a wiper ring may be in addition to the forces described above.

Materials used to form the outer rings and the inner ring of a wiper ring have been described as including PTFE and PEEK. Other materials, as for example polymer blends or compounds, may generally be used to form outer rings and inner rings.

A reciprocating compressor, as shown above with respect to FIGs. 1 and 2, is oriented in a horizontal configuration. It should be understood that the wiper ring described above is not limited to being incorporated for use with a horizontally oriented reciprocating compressor. For example, the wiper ring described above may be incorporated for use in a vertically oriented reciprocating compressor without departing from the spirit or the scope of the disclosure.

While this application has described the techniques presented herein in detail and with reference to specific embodiments thereof, it is nevertheless not intended to be limited to the details shown, since it will be apparent that various modifications and structural changes may be made therein without departing from the scope of the inventions and within the scope and range of equivalents of the claims. In addition, various features from one of the embodiments may be incorporated into another of the embodiments. Accordingly, it is appropriate that the appended claims be construed broadly and in a manner consistent with the scope of the disclosure as set forth in the following claims.

Finally, it is intended that the present invention cover the modifications and variations of this invention that come within the scope of the appended claims and their equivalents. For example, it is to be understood that terms such as "left," "right," "top," "bottom," "front," "rear," "side," "height," "length," "width," "upper," "lower," "interior," "exterior," "inner," "outer" and the like as may be used herein, merely describe points of reference and do not limit the present invention to any particular orientation or configuration. Further, the term "exemplary" is used herein to describe an example or illustration. Any embodiment described herein as exemplary is not to be construed as a preferred or advantageous embodiment, but rather as one example or illustration of a possible embodiment of the invention.

Similarly, when used herein, the term "comprises" and its derivations (such as "comprising", etc.) should not be understood in an excluding sense, that is, these terms should not be interpreted as excluding the possibility that what is described and defined may include further elements, steps, etc. Meanwhile, when used herein, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially". Finally, for the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

## Claims

1. A rod packing assembly comprising:
a first ring;
a second ring;
a third ring including at least one port defined therein, wherein the third ring is coupled to the first ring and to the second ring, the third ring being positioned between the first ring and the second ring, and wherein the first ring, the second ring, and the third ring are configured to surround a rod and to collectively scrape a surface of the rod;
a first biasing member, the first biasing member being arranged around the first ring, wherein the first biasing member applies a first force to the first ring to urge the first ring against the rod and against the third ring, thereby urging the third ring against the rod;
a second biasing member, the second biasing member being arranged around the second ring, wherein the second biasing member applies a second force to the second ring to urge the second ring against the rod and against the third ring, thereby urging the third ring against the rod; and
at least one third biasing member, the at least one third biasing member being arranged around the third ring, wherein the at least one third biasing member applies at least a third force to the third ring to urge the third ring against the rod.

2. The rod packing assembly of claim 1 wherein the surface of the rod is coated with a substance, wherein the first ring, the second ring, and the third ring are configured to collectively scrape the surface of the rod to remove the substance.

3. The rod packing assembly of claim 2 wherein the third ring is configured to capture the substance after the substance is removed from the surface of the rod and to direct the substance through at least one port.

4. The rod packing assembly of claim 2 or 3 wherein the first ring includes a first scraping surface, the second ring includes a second scraping surface, and the third ring includes a third scraping surface and a fourth scraping surface, the first scraping surface and the third scraping surface being configured to scrape the surface of the rod to remove the substance when the rod moves in a first direction, the second scraping surface and the fourth scraping surface being configured to scrape the surface of the rod to remove the substance when the rod moves in a second direction.

5. The rod packing assembly of any previous claim wherein the first ring includes a first feature and the second ring includes a second feature, the first feature being arranged enable the third ring to be seated against the first ring and to allow the first ring to apply the first force to the third ring, the second feature being arranged to enable the third ring to be seated against the second ring and to allow the second ring to apply the second force to the third ring.

6. The rod packing assembly of any previous claim further including:
a packing case, the packing case having a first surface, wherein the first ring, the second ring, and the third ring are contained within the packing case, the first ring being arranged to cooperate with the first surface to form a seal.

7. A reciprocating compressor comprising:
a piston assembly including a piston and a piston rod;
a crankcase, the crankcase containing a crankshaft and oil, wherein the piston rod is coupled to the piston and to the crankshaft, wherein the oil coats the piston rod; and
the rod packing assembly of anyone of claims 1 to 6.

8. The reciprocating compressor of claim 7, wherein the first scraping surface is a first primary scraping surface, the second scraping surface is a second primary scraping surface, the third scraping surface is a first auxiliary scraping surface, and the fourth scraping surface is a second auxiliary scraping surface, and wherein the first auxiliary scraping surface removes the oil that bypasses the first primary scraping surface and the second auxiliary scraping surface removes the oil that bypasses the second primary scraping surface.

9. The reciprocating compressor of claim 7 or 8, further including:
a conduit, the conduit configured to return the oil removed from the piston rod and directed through the plurality of ports to the crankcase.

10. A reciprocating compressor comprising:
a piston assembly including a piston and a piston rod;
a crankcase, the crankcase containing a crankshaft and oil, wherein the piston rod is coupled to the piston and to the crankshaft, wherein the oil coats the piston rod; and
a packing ring assembly positioned around the piston rod such that the piston rod moves along a first axis through the packing ring assembly, the packing ring assembly including a first assembly having a plurality of scraping surfaces arranged to be forced against a surface of the piston rod to scrape the surface of the piston rod to remove the oil from the piston rod as the piston rod moves along the first axis, the packing ring assembly further being arranged to capture the oil removed from the piston rod and to direct the oil removed from the piston rod through the packing ring assembly to return the oil removed from the piston rod to the crankcase.

11. The reciprocating compressor of claim 10 wherein the packing ring assembly includes a first outer ring, a second outer ring, and an inner ring having a plurality of ports defined therein to direct the oil removed from the piston rod to the crankcase, the inner ring being sandwiched between the first outer ring and the second outer ring, and wherein the first outer ring and the second outer ring apply at least one inward force to urge the inner ring against the piston rod.

12. The reciprocating compressor of claim 11 wherein the plurality of scraping surfaces includes a first scraping surface, a second scraping surface, a third scraping surface, and a fourth scraping surface, wherein the first outer ring includes the first scraping surface arranged to scrape the surface of the piston rod to remove the oil, the second outer ring includes the second scraping surface arranged to scrape the surface of the piston rod to remove the oil, and the inner ring includes the third scraping surface and the fourth scraping surface arranged to scrape the surface of the piston rod to remove the oil.

13. The reciprocating compressor of claim 12 wherein the first scraping surface is a first primary scraping surface, the second scraping surface is a second primary scraping surface, the third scraping surface is a first auxiliary scraping surface, and the fourth scraping surface is a second auxiliary scraping surface, and wherein the first auxiliary scraping surface removes the oil that bypasses the first primary scraping surface when the piston rod moves in a first direction along the first axis and the second auxiliary scraping surface removes the oil that bypasses the second primary scraping surface when the piston rod moves in a second direction along the first axis.

14. The reciprocating compressor of claim 11, 12, or 13, wherein the packing ring assembly further includes a first annular spring, a second annular spring, a third annular spring, and a fourth annular spring, the first annular spring being arranged around the first outer ring to force the first outer ring against the piston rod, the second annular spring being arranged around the second outer ring to force the second outer ring against the piston rod, the third annular spring being arranged around the inner ring to force the inner ring against the piston rod, and the fourth annular spring being arranged around the inner ring to force the inner ring against the piston rod.

15. The reciprocating compressor of claim 14 wherein the first outer ring includes a first channel in which the first annular spring is disposed, the second outer ring includes a second channel in which the second annular spring is disposed, and the inner ring includes a third channel in which the third annular spring is disposed and a fourth channel in which the fourth annular spring is disposed.
